(19)

Europäisches
Patentamt
European
Patent Office
Office européen
des brevets

(11) **EP 2 821 983 A1**

(12) **EUROPEAN PATENT APPLICATION**
published in accordance with Art. 153(4) EPC

(43) Date of publication:
**07.01.2015 Bulletin 2015/02**

(21) Application number: **13755369.9**

(22) Date of filing: **19.02.2013**

(51) Int Cl.:
*G09B 19/00* (2006.01)   *G05B 23/02* (2006.01)
*G06Q 50/04* (2012.01)   *G06Q 50/20* (2012.01)
*G09B 9/00* (2006.01)

(86) International application number:
**PCT/JP2013/000896**

(87) International publication number:
**WO 2013/128842 (06.09.2013 Gazette 2013/36)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**

(30) Priority: **28.02.2012   JP 2012040851**

(71) Applicant: **Mitsubishi Heavy Industries, Ltd.
Tokyo 108-8215 (JP)**

(72) Inventors:
• **KOYANAGI, Yoko
  Tokyo 108-8215 (JP)**
• **TAKEDA, Kazuhiro
  Tokyo 108-8215 (JP)**

(74) Representative: **Bongiovanni, Simone et al
Studio Torta S.p.A.
Via Viotti, 9
10121 Torino (IT)**

(54) **OPERATION LEARNING LEVEL EVALUATION SYSTEM**

(57)    Provided a system that can quantitatively and accurately evaluate operation learning levels of trainees by taking into consideration temporal factors. This learning level evaluation system (10) executes a procedure evaluation process that evaluates operating procedures and a timing evaluation process that evaluates operation timing. The procedure evaluation process evaluates the similarity of trainee encoded data obtained by encoding of trainee data recorded according to operations carried out by a trainee to skilled person encoded data obtained by encoding skilled person data recorded according to operations carried out by a skilled person. The timing evaluation process evaluates timing offsets in carrying out the same operations on the basis of the skilled person encoded data and trainee encoded data.

**FIG. 2**

EP 2 821 983 A1

**Description**

Technical Field

The present invention relates to a system for evaluating a learning level of a person who is in training in running operation of, for example, a chemical plant or a power-generating plant.

Background Art

In order to evaluate a learning level of a trainee during running training in a plant, a technique for quantitatively and accurately evaluating the learning level has been demanded.

A conventional approach to a method for measuring the learning level is to evaluate the number of outputs and time periods of alarm signals (alarms), which are output with reference to state quantities of components in the plant such as pressures and temperatures. The learning level of operation however cannot be evaluated only by the alarms, and therefore a method for evaluating operation procedures in addition to the alarms is proposed in Patent Literature 1. Patent Literature 1 proposes to evaluate the learning level by recording operations by the trainee as encoded data, which are made into character strings, and comparing them with model procedures performed by an expert. In addition, Patent Literature 2 proposes to evaluate the trainee by registering a process parameter to be monitored and a reference value thereof, and comparing it with a running process parameter of the trainee all the time, and if the value becomes close to the reference value, storing this as an important parameter.

Citation List

Patent Literature

Patent Literature 1: Japanese Patent Laid-Open No. 2009-86542
Patent Literature 2: Japanese Patent Laid-Open No. 2-139590
Patent Literature 3: Japanese Patent Laid-Open No. 8-320644

Summary of Invention

Technical Problem

It is however still difficult to say that the quantitative and accurate evaluation is made with only evaluating the operation procedures, like Patent Literatures 1 and 2.

For example, there is the case where, after completing a previous procedure, the trainee may be requested to confirm conditions and shift to the next operation. However, when comparing between the case where the trainee shifts to the next operation in a short time without confirming the conditions, and the case where the trainee confirms the conditions and shifts to the next operation, Patent Literature 1 gives the same evaluation to both the cases whereas the latter case being recommended should be highly evaluated. In contrast, taking a long time for each operation is not desirable because it is a cause of increasing energy needed for the operations, but in this case as well, Patent Literatures 1 and 2 cannot give different evaluations. Patent Literature 3 discloses an evaluation method focusing on comparison of the operation timings of operations with those by an expert, but it takes no evaluation based on differences in the operation procedures into account.

As described above, in an actual running training, a time taken to shift to a next operation is an important evaluation item as well as the operation procedures, and a method that can perform the evaluation including this is demanded.

Thus, the present invention has an object to provide a system that can evaluate an operation learning level of a trainee quantitatively and accurately by taking a temporal element into account.

Solution to Problem

The pieces of encoded data on the expert and the trainee used for evaluating operation procedures each include procedures performed in chronological order. Thus, the inventors have completed the following invention by focusing on evaluating the operation timings using this data.

The present invention provides a learning level evaluation system that evaluates a learning level of the running operation by a person who is in training in the running operation, by comparing the running operation with the running operation by a model expert.

The learning level evaluation system of the present invention executes a procedure evaluation process to evaluate the operation procedures and a timing evaluation process to evaluate the operation timings.

The procedure evaluation process evaluates the degree of similarity of encoded trainee data with respect to encoded expert data.

Note that the encoded expert data is obtained by encoding expert data that is recorded according to the operation performed by the expert, and the encoded trainee data is obtained by encoding trainee operation data that is recorded according to the operation performed by the trainee.

In addition, the timing evaluation process evaluates a deviation between timings at which the same operation is performed, on the basis of the encoded expert data and the encoded trainee data.

According to the above-described learning level evaluation system of the present invention, since the learning level is evaluated taking a temporal element into account as well, the evaluation result is quantitative and is an accurate evaluation fitting an actual running state of a training target.

In addition, since the timing evaluation can be made from the encoded expert data and the encoded trainee data, which are prepared for use of the evaluation of the operation procedures, according to the present invention, there is no need to prepare another data item for the timing evaluation.

Note that, with respect to the procedure evaluation process and the timing evaluation process, it is enough to have a component that serves the functions, does not matter whether they are physically integrated or separated. This is also applied to the following stabilization degree evaluation process and state quantity evaluation process.

The timing evaluation process in the learning level evaluation system of the present invention can quantitatively evaluate a deviation between timings at which the same operation is performed by an error ratio $\Delta t$ in following Expression (1), if previous first operations are the same and second operations subsequent thereto are the same, respectively, between the encoded expert data and the encoded trainee data. Note that Expression (1) is a function that calculates the error ratio $\Delta t$ using time lags t1 and t2, and includes a number of forms as will be described hereafter.

$$\text{Error ratio } \Delta t = F(t1, t2) \quad \ldots \text{ Expression (1)}$$

t1: a time lag between the first operation and the second operation in the encoded expert data
t2: a time lag between the first operation and the second operation in the encoded trainee data

The learning level evaluation system of the present invention can execute a stabilization degree evaluation process to evaluate a stability of an operation by the trainee. This stabilization degree evaluation process compares a cumulative time of alarm signals recorded according to the operation performed by the expert with a cumulative time of alarm signals recorded according to the operation performed by the trainee.

The learning level evaluation system of the present invention can obtain evaluation results more accurately by performing the evaluation based on the alarm signals, in addition to the procedure evaluation process and the timing evaluation process.

The learning level evaluation system of the present invention can integrate the procedure evaluation and the timing evaluation, as will be described below. That is, in the case where the procedure evaluation process calculates the degree of similarity of the encoded trainee data with respect to the encoded expert data as an edit distance, the timing evaluation process multiplies the error ratio $\Delta t$ with the edit distance, which results in the integration of the procedure evaluation and the timing evaluation. This then has an advantage in that two learning levels of the operation procedures and the operation timings can be determined by only one evaluation value.

Note that this evaluation does not prevent performing the abovementioned procedure evaluation and timing evaluation. Increased number of evaluation items allows for multifaceted consideration of the evaluation results.

The learning level evaluation system of the present invention can include a state quantity evaluation process to evaluate a state quantity of an operation target, instead of or in addition to the timing evaluation process. The evaluation using the state quantity allows for evaluating the operation timing depending on the state quantity.

This state quantity evaluation process is to compare a state quantity contained in the encoded expert data with the state quantity contained in the encoded trainee data.

Advantageous Effects of Invention

According to the learning level evaluation system of the present invention, the learning level is evaluated with the temporal element taken into account as well, which makes the evaluation results thereof quantitative and accurate.

In addition, since the timing evaluation can be made from the encoded expert data and the encoded trainee data, which are prepared for use of the evaluation of the operation procedures, the present invention does not need to prepare another data source for the timing evaluation.

Brief Description of Drawings

[FIG. 1] FIG. 1 is a functional block diagram showing an operation learning level evaluation system of the present embodiments.
[FIG. 2] FIG. 2 is a flow chart showing steps of an evaluation process in an operation learning level evaluation system of a first embodiment.
[FIG. 3] FIG. 3 is a diagram showing one example of trainee data in the first embodiment, encoded operation data and alarm data obtained from the trainee data, and character string data obtained from the encoded operation data.
[FIG. 4] FIG. 4 is a diagram illustrating how to evaluate operation timings, which shows encoded expert operation data and encoded trainee operation data by comparison.
[FIG. 5] FIG. 5 is a diagram illustrating stability evaluation, which shows a content of alarm data and cumulative alarm time periods.
[FIG. 6] FIG. 6 is a diagram showing a display example of evaluation results in the first embodiment.
[FIG. 7] FIG. 7 is a diagram for describing an edit distance to which time weights are assigned.
[FIG. 8] FIG. 8 is a diagram illustrating state quantity evaluation.

Description of Embodiments

The present invention will be described below in detail on the basis of embodiments shown in the accompanying drawings.

[First embodiment]

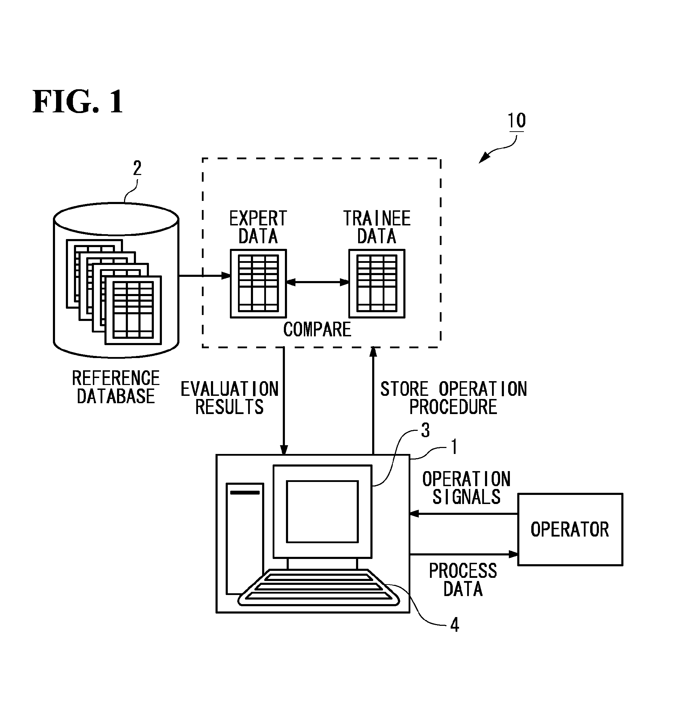

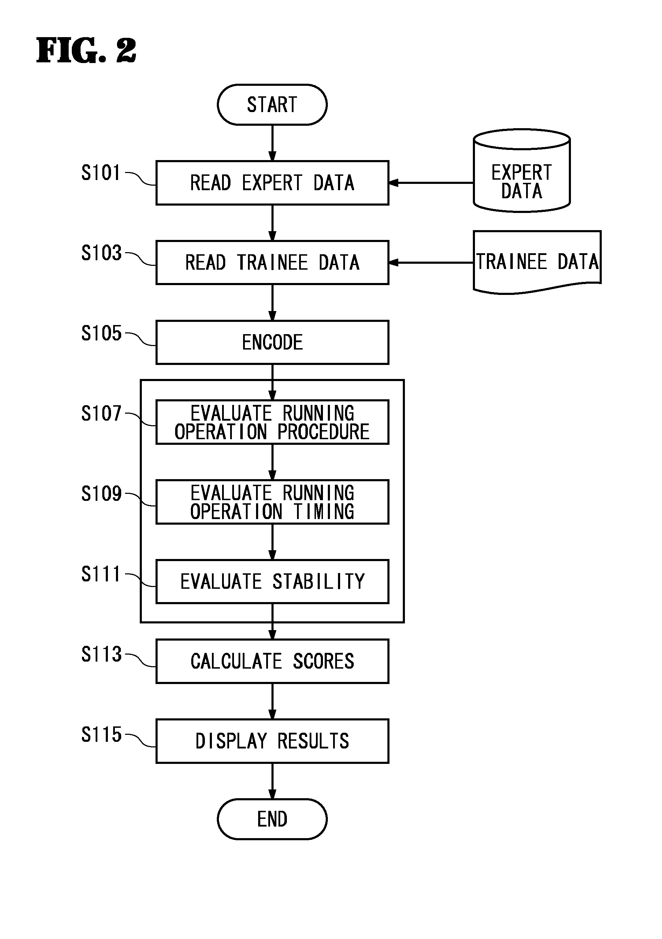

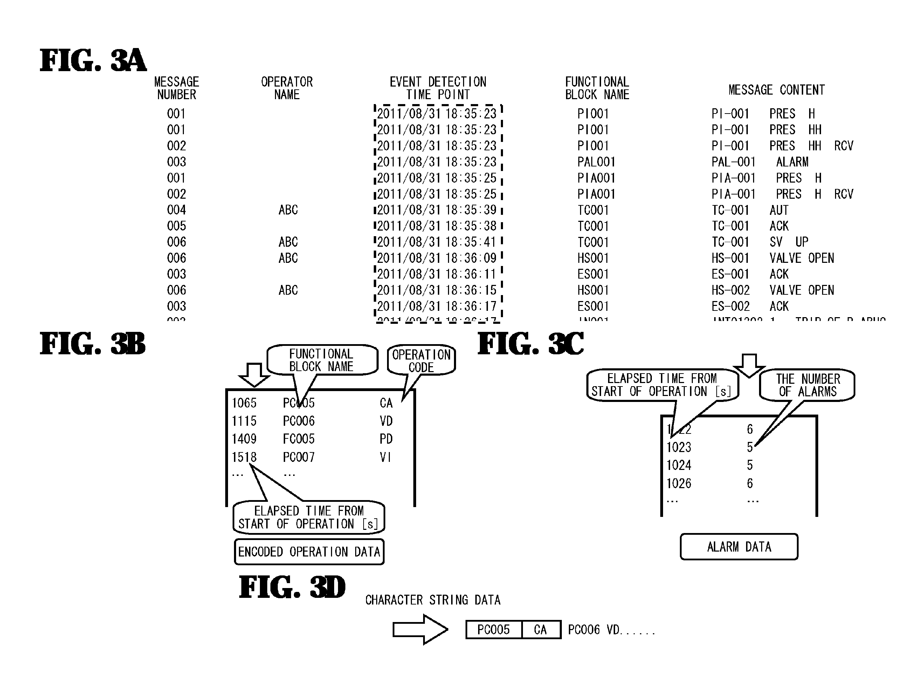

A learning level evaluation system 10 according to the present embodiment performs the training in the running operations of various plants such as a plant for manufacturing chemical substances and a thermal/nuclear power-generating plant, to quantitatively evaluate a learning level of the operations.
As shown in FIG. 1, the learning level evaluation system 10 includes, for example, a system body 1 constituted by a PC (Personal Computer) and a data storage unit (Reference Database) 2. Note that although this example shows the data storage unit 2 as a component separated from the system body 1, the data storage unit 2 can be provided in a data storage device of the system body (PC) 1.
The system body 1 has a function of a running training simulator that can simulate the running to perform the training, and the learning level evaluation system 10 can be considered as a function accompanying the running training simulator.
A trainee (operator) inputs operation signals into the system body 1 following the Process Data on the plant provided from the system body 1. The term "Process Data" herein indicates processes in the plant, for example, a process A, a process B, a process C, ... The system body 1 causes a display 3 as a display device to display the process A, the process B, the process C, ... in order, and the trainee inputs running operation procedures necessary for the displayed processes into the system body 1 via a keyboard 4 as an input means, to train the running.
The running operation procedures input by the trainee are stored in the data storage unit 2 as trainee data. The trainee data is distinguished and stored for each trainee. The data storage unit 2 therefore contains pieces of trainee data on a plurality of trainees. The data storage unit 2 also contains expert data. The expert data is stored, as with the trainee data, on the basis of an expert inputting operational conditions following the Process Data. The learning level evaluation system 10 compares the expert data with the trainee data to evaluate a learning level of the trainee in question, and displays the results thereof on the display 3.
The steps of the learning level evaluation of the trainee executed by the learning level evaluation system 10 will be described on the basis of FIG. 2. The learning level evaluation system 10 evaluates the learning levels of the running operation by the trainee, as will be described hereafter, on the basis of three items, that is, running operation procedures (may be hereafter simply referred to as operation procedures), running operation timings (may be hereafter simply referred to as operation timings), and stabilities. The present embodiment is characterized in that the operation timings are considered as an evaluation item among the items.
First, the system body 1 reads the expert data from the data storage unit 2, while reading the trainee data (steps S101 and 103 of FIG. 2). FIG. 3A shows one example of the trainee data. Note that the expert data also contains data similar to the trainee data.

Next, the system body 1 encodes the read expert data and trainee data (step S105 of FIG. 2). The encoding of the operation procedures contributes the evaluation of the operation procedures and the operation timings. The encoding generates the encoded operation data (FIG. 3B) and the alarm data (FIG. 3C). The encoding is to convert time into a comparable variable, with which data is arranged in chronological order from an operation start time. Note that the expert data and the trainee data are referred to as reference data as a general term for both of them.

The encoded operation data is data on the operation procedures in the reference data, which is arranged in chronological order. The data on the operation procedures is constituted by, in the example of FIG. 3B, elapsed times (seconds) from the start of the operation, functional block names, and operation codes (FIG. 3B).

The elapsed times are calculated from "event detection time points" in the reference data.

The functional block names are "functional block names" in the reference data extracted as they are, being data to identify devices of operation targets.

The operation codes are generated from "message numbers" and "message contents" in the reference data, being data to identify contents of the operations.

For example, the first piece of data (at the first row) of FIG. 3B represents that an operation is performed at the elapsed time of "1065 (seconds)," to a device identified by "PC005," and the content of the operation is identified by "CA."

The above-described pieces of data are created for both the expert and the trainee.

Note that although the encoding of the expert data and the trainee data are performed at the time of the evaluation, the encoding may be performed and the encoded data may be stored in the data storage unit 2 in advance.

The alarm data is obtained by, as shown in FIG. 3C, arranging the number of alarms in chronological order, and is constituted by elapsed times (seconds) from the start of the operation, and the number of alarms (alarm signals) having been output from the simulator at that point. The second piece of data (at the second row) of FIG. 3C represents that the number of alarms having been output from the simulator is five at the elapsed time of "1023 (seconds)."

[Evaluating running operation procedures]

Next, a process for evaluating the operation procedures using an Edit Distance of a difference between the operation procedures of the expert and the trainee (step S107 of FIG. 2) will be described.

For both the expert data and the trainee data, the pieces of encoded operation data (functional block names and operation codes) in chronological order are arranged to create pieces of character string data (expert character string data and trainee character string data). FIG. 3D shows one example thereof. FIG. 3D shows character string data created from the first and second rows of FIG. 3B.

Next, an edit distance between the expert character string data and the trainee character string data is calculated and this is treated as an operation procedure evaluation value, with which, in the present embodiment, a difference between the operation procedures by the expert and the trainee is evaluated quantitatively.

The edit distance is a numerical value representing how the two character strings differ (or the degree of similarity). Specifically, the edit distance is given as a minimum number of steps required to change one character string into another character string by inserting, deleting, or replacing a character.

For example, taking a character string "paent" for instance, inserting "t" between "a" and "e" changes it into a character string "patent." The edit distance between "paent" and "patent" is therefore one. Likewise, since a character string "paen" is obtained by deleting "t" from a character string "paent," the edit distance between "paent" and "paen" is also one, and since a character string "baent" is obtained by replacing one character "p" in a character string "paent" with "b," the edit distance between "paent" and "baent" is also one. In such a manner, the shorter the edit distance is, the more the two character strings are similar. Note that the edit distance between two identical character strings is zero.

Thus, calculating an edit distance from the trainee character string data to the expert character string data allows the learning level of the operation procedures by the trainee in question with respect to the operation procedures by the expert to be grasped quantitatively. Note that an actual evaluation value is derived by performing weighting that is determined on the basis of relations with other evaluation items as will be described hereafter. This also applies to the following evaluation of the operation timings and evaluation of stabilities.

[Evaluating running operation timings]

Next, a process for evaluating the operation timings by evaluating a difference between the operation timings of the expert and the trainee with a penalty function method (step S109 of FIG. 2) will be described.

This evaluation starts with calculating time lags t1 and t2 between operations of the same two consecutive operations in the encoded expert data and the encoded trainee data.

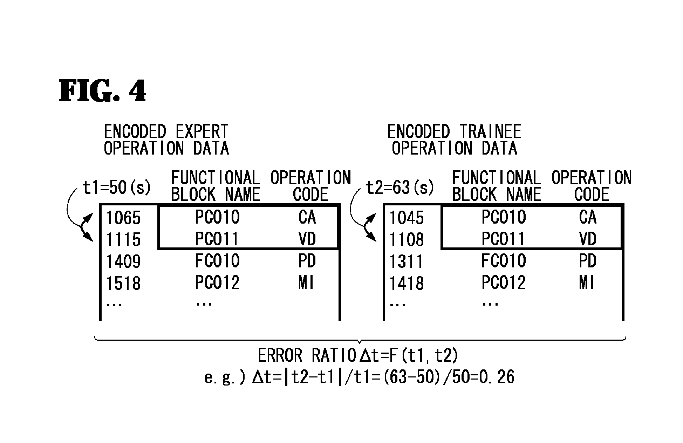

One example will be described on the basis of FIG. 4. The functional block names and the operation codes of the first row and the second row of the encoded expert data are identical to those of the first row and the second row of the encoded trainee data, respectively, which means that the same two consecutive operations are performed. The time lag t1 between the first row and the second row in the encoded expert data is 50 (seconds), while the time lag t2 between the first row and the second row in the encoded trainee data is 63 (seconds).

On the basis of the two obtained time lags, as one specific example of Expression (1), an error ratio $\Delta t$ is calculated by following Expression (2). This error ratio $\Delta t$ represents how a time that the trainee takes for an operation deviates from that taken by the expert, which will be treated as an operation timing evaluation value. The error ratio $\Delta t$ in the above-described example (t1=50 and t2=63) is 0.26. Naturally, the smaller error ratio $\Delta t$ represents a higher learning level of the trainee in question.

```
Error ratio Δt = |t2-t1| / t1  ... Expression (2)
```

The error ratios $\Delta t$ are calculated by the number n of the same two consecutive operations ($\Delta t_1$, $\Delta t_2$, ... $\Delta t_n$), the mean value of which is used for evaluating the operation timings.

[Evaluating stabilities]

Next, a process in which the learning level evaluation system 10 evaluates stabilities (step S111 of FIG. 2) will be described. The stabilities are evaluated using alarm data (FIG. 3C) as follows.

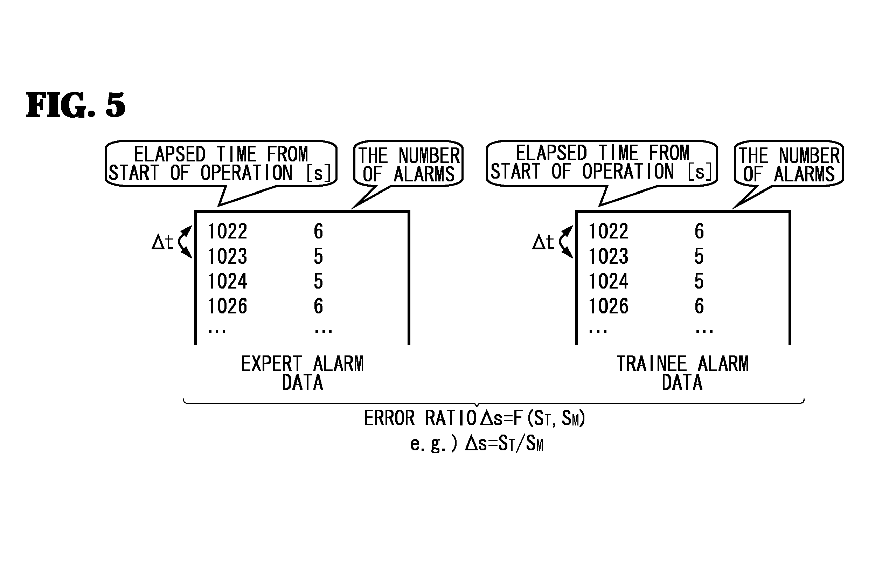

As shown in FIG. 5, cumulative alarm time periods are calculated for both the expert and the trainee on the basis of the alarm data by following Expression (3). When the former cumulative alarm time period is denoted by $S_M$, and the latter cumulative alarm time period is denoted by $S_T$, an error ratio x is calculated by following Expression (4) as one specific example of Expression (1), which is treated as a stability evaluation value.

```
Cumulative alarm time period S = Σ(Δt × the number of
alarms)  ... Expression (3)
```

```
Error ratio x = S_T / S_M  ... Expression (4)
```

[Calculating comprehensive evaluation]

The learning level evaluation system 10 next calculates an evaluation value, which combines the results of three evaluation items of the operation procedures, the operation timings, and the stability, as a score (step S113 of FIG. 2).

A comprehensive evaluation, as shown in following Expression (5), is calculated after assigning weights to the results of the three evaluation items with preset factors. Note that k1, k2, and k3 in Expression (5) are weighting factors for the respective evaluation items. The comprehensive evaluation is stored in the data storage unit 2 together with the operation procedure evaluation value, the operation timing evaluation value, and the stability evaluation value, being associated with the trainee in question.

```
Comprehensive evaluation (score) = F(operation procedure
evaluation value, operation timing evaluation value, stability
evaluation value, weighting factors (k1, k2, k3) of the
respective evaluation values)  ... Expression (5)
```

[Displaying results]

Upon completing the above evaluations, the learning level evaluation system 10 displays the results on the display 3 (step S115 of FIG. 2).

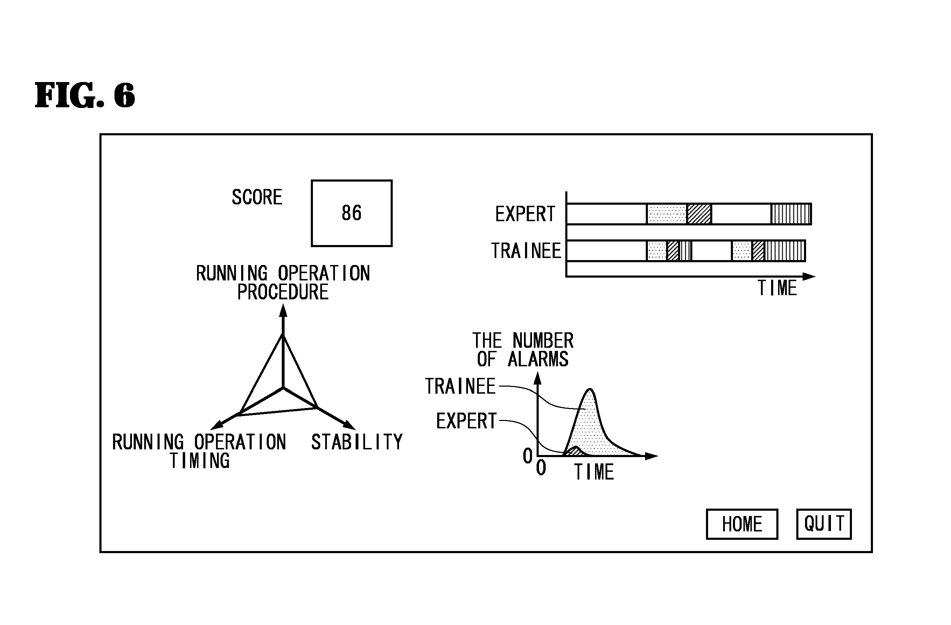

FIG. 6 shows one example thereof. This example shows, in addition to a score as the comprehensive evaluation, a graph showing the individual scores of the three evaluation items, a graph showing the time allotments for each operation item by the expert and the trainee by comparison, and a graph showing the cumulative alarm time periods of the expert and the trainee by comparison. The trainee or other persons can quantitatively evaluate the learning level of the trainee in question by referring to this display, and can grasp the difference in operations with respect to the expert as well. Furthermore, the comprehensive evaluation is a result that takes also the operation timings into account, with which an accurate evaluation fitting the actual conditions of the running operation can be made.

[Second embodiment]

Although the operation procedures and the operation timings are independently evaluated in the first embodiment, the present embodiment is characterized in that the both can be evaluated at the same time. Other points thereof are similar to those of the first embodiment, and the characteristic point will be described below.

The edit distance being an indicator for evaluating the degree of similarity between the character strings is calculated by, as described in the first embodiment, comparing a character string being an evaluation target with a model character string from a leading character and by adding one if any one of the manipulations of "replacing," "inserting, " and "deleting" a character is required or by adding zero otherwise, and the cumulative total thereof is calculated as the distance. It then means that the shorter this distance is, the higher the degree of similarity between the two character strings is.

At the time of calculating this edit distance, a time element is also evaluated by assigning time weights defined as follows.

Distance with time weights:

If the edit distance is one; 1
Otherwise; Weight $\times$ Error ratio ($\Delta$t)
wherein Weight: weighting factor (e.g., a function taking a value of $y=b/a^2$ (0 through 1))

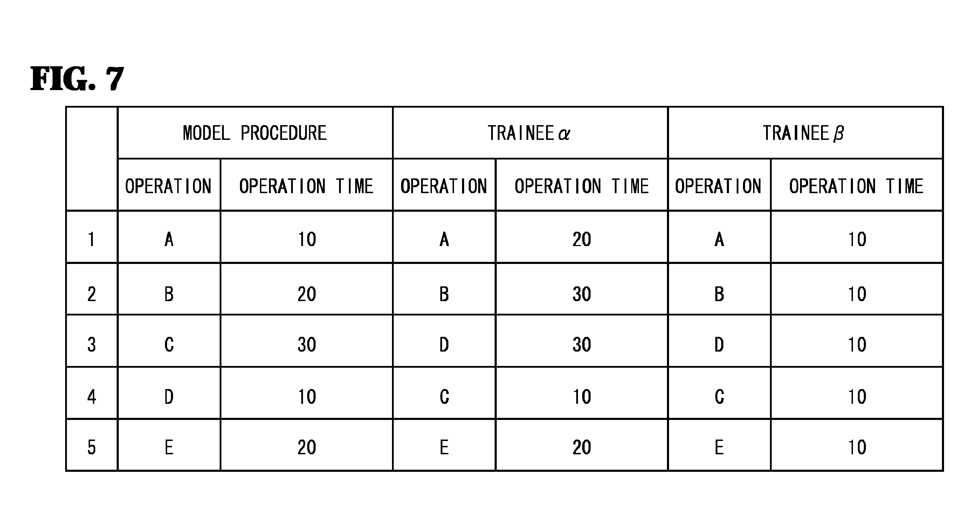

The distance with the time weights will be described on the basis of an example shown in FIG. 7.
In the example of FIG. 7, procedures in a model operation and operation procedures performed by trainees ($\alpha$, $\beta$) are as follows.

Expert: A$\rightarrow$B$\rightarrow$C$\rightarrow$D$\rightarrow$E
Trainees: A$\rightarrow$B$\rightarrow$D$\rightarrow$C$\rightarrow$E

That is, since replacing the third operation by the trainees ($\alpha$, $\beta$) with "C" and replacing the fourth operation with "D" result in the model operation, the edit distance (ED) is two. This value does not take time into account.

ED: 0+0+1+1+0=2

Assuming that the weighting factor is 0.1, and taking the time weights into account, the ED for the first to fifth operations by the trainee $\alpha$ is as follows. The ED of the trainee $\alpha$ taking the time weights into account is therefore 2.15.

First: 0.1$\times$|20-10|/10=0.1
Second: 0.1$\times$|30-20|/20=0.05
Third and Fourth: 1 (ED=1)
Fifth: 0.1$\times$|20-20|/20=0
ED = 0.1+0.05+1+1+0=2.15

In the case of the trainee $\beta$, the edit distance for the first to fifth operations is as follows. The edit distance (ED) of the trainee $\beta$ taking the time weights into account is therefore 2.10, which means that the trainee $\alpha$ has a higher degree of similarity.

First: 0.1$\times$|10-10|/10=0
Second: 0.1$\times$|10-20|/20=0.05
Third and Fourth: 1 (ED=1)
Fifth: 0.1$\times$|10-20|/20=0.05

As described above, according to the present embodiment, there is an advantage in that the two learning levels of the operation procedures and the operation timings can be determined by only one evaluation value. Note that the present invention is not intended to deny the determination in combination with the evaluation of the operation procedures and the evaluation of the operation timings.

[Third embodiment]

In a third embodiment, a state quantity of the plant is evaluated as an operation condition. The state quantity herein includes, for example, a pressure and a temperature. This evaluation is applicable to an alternative to the time that is treated as the operation condition in the first embodiment and the second embodiment, or this evaluation may be added to the three evaluation items.

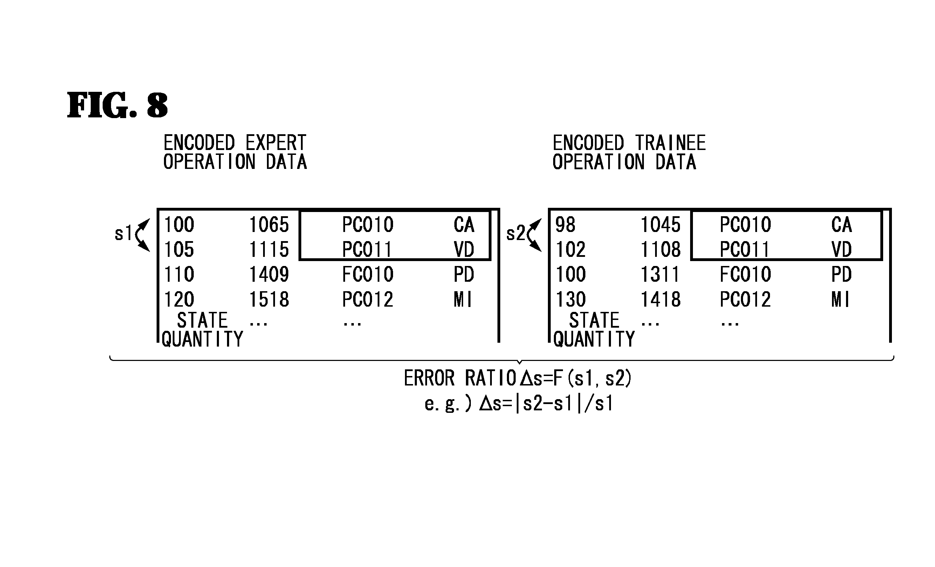

For the evaluation of the operation timing, a state quantity specified in advance is used. The value of a state quantity by the expert and the value of a state quantity by the trainee are evaluated as with the operation timing in the first embodiment, which allows for an evaluation equivalent to the evaluation of the operation timing. The state quantity to be specified is determined for each operation. A specific example thereof will be described below on the basis of FIG. 8.

Differences s1 and s2 between the state quantities between the same two consecutive operations are calculated for the encoded expert data and the encoded trainee data. In the example of FIG. 8, the functional block names and the operation codes of the first row and the second row in the encoded expert data are identical to those of the first row and the second row in the encoded trainee data, which means that the same two consecutive operations are performed. The state quantity difference s1 between the first row and the second row in the encoded expert data is 5 (Pa), while the state quantity difference s2 between the first row and the second row in the encoded trainee data is 4 (Pa).

On the basis of the two obtained state quantity differences, as one specific example of Expression (1), a state quantity error ratio $\Delta s$ is calculated by following Expression (6). This error ratio $\Delta s$ represents how much the error between the state quantity from the operation by the trainee and the state quantity from the operation by the expert is. In plant running, there is a state quantity that varies with a time course of the running operation. For this reason, evaluating the error ratio $\Delta s$ with respect to such a state quantity is equivalent to the evaluation of the operation timing. The error ratio $\Delta s$ in the above-described example (s1=5 and s2=4) is 0.20. Naturally, the smaller error ratio $\Delta s$ represents a higher learning level of the trainee in question.

$$\text{Error ratio } \Delta s = |s2-s1| \ / \ s1 \quad ... \ \text{Expression (6)}$$

The error ratios $\Delta s$ are calculated by the number n of the same two consecutive operations ($\Delta t_1$, $\Delta t_2$, ... $\Delta t_n$), the mean value of which is used for evaluating the plant state quantity.

As described above, according to the third embodiment, using the operation timing depending on the state quantity as an evaluation item allows for evaluating the learning level of the trainee better fitting an actual condition of a training target including plants.

There has been described the present invention on the basis of the first embodiment through the third embodiment, and the present invention allows the following matters.

The most typical application example of the learning level evaluation system according to the present invention is to accompany a running operation simulator, but is not limited thereto and can be applied to actual plants, where operation procedures performed in an actual running of the plant are stored in chronological order, and the learning level of using an actual machine can be thereafter evaluated by the learning level evaluation system according to the present invention.

In addition, the applicable field of the learning level evaluation system according to the present invention is not limited to plants, and available to any devices or apparatuses that require training in the running operations thereof.

Furthermore, although Expression (2) (Error ratio $\Delta t = |t2-t1| \ / \ t1$) is used as the specific example of the error ratio $\Delta t$ by Expression (1), the error ratio $\Delta t$ can be calculated also by the following exemplary expressions, where t0 is a reference time lag.

$$\text{Error ratio } \Delta t = (t2-t1) \ / \ t0$$

$$\text{Error ratio } \Delta t = (t2-t1) \ / \ t1$$

$$\text{Error ratio } \Delta t = (t2-t1) \text{ / } t2$$

$$\text{Error ratio } \Delta t = |t2-t1| \text{ / } t2$$

$$\text{Error ratio } \Delta t = (t2-t1)^2 \text{ / } t1^2$$

Apart from the above, the configuration described in the embodiments may be chosen or changed to other configurations accordingly without departing from the gist of the present invention.

Reference Signs List

10 learning level evaluation system
1 system body
2 data storage unit
3 display
4 keyboard

**Claims**

1. A learning level evaluation system that evaluates a learning level of running operation by a person who is in training in running operation, by comparing the running operation with running operation by a model expert, the learning level evaluation system executing:

   a procedure evaluation process to evaluate an operation procedure; and
   a timing evaluation process to evaluate an operation timing, wherein
   the procedure evaluation process evaluates
   a degree of similarity of encoded trainee data obtained by encoding trainee data recorded according to operation performed by the trainee with respect to encoded expert data obtained by encoding expert data recorded according to operation performed by the expert, and
   the timing evaluation process evaluates
   a deviation between timings at which the same operation is performed, on the basis of the encoded expert data and the encoded trainee data.

2. The learning level evaluation system according to claim 1, wherein
   the timing evaluation process calculates,
   if previous first operations are the same and second operations subsequent thereto are the same,
   between the encoded expert data and the encoded trainee data,
   an error ratio $\Delta t$ in following Expression (1) on the basis of a time lag t1 between the first operation and the second operation in the encoded expert data, and
   a time lag t2 between the first operation and the second operation in the encoded trainee data, to evaluate the deviation between the timings at which the same operation is performed.

$$\text{Error ratio } \Delta t = F(t1, t2) \quad \text{... Expression (1)}$$

3. The learning level evaluation system according to claim 1 or 2 that executes a stabilization degree evaluation process to evaluate a stability of an operation by the trainee, wherein

the stabilization degree evaluation process compares
a cumulative time of alarm signals recorded according to the operation performed by the expert with
a cumulative time of alarm signals recorded according to the operation performed by the trainee.

4. The learning level evaluation system according to claim 1, wherein
the procedure evaluation process calculates
a degree of similarity of the encoded trainee data with respect to the encoded expert data, as an edit distance, and
the timing evaluation process multiplies
the error ratio Δt with the edit distance.

5. The learning level evaluation system according to claim 1, further comprising a state quantity evaluation process to evaluate a state quantity of an operation target, instead of or in addition to the timing evaluation process, wherein
the state quantity evaluation process compares
the state quantity contained in the encoded expert data with
the state quantity contained in the encoded trainee data.

## FIG. 1

REFERENCE DATABASE

EXPERT DATA

TRAINEE DATA

COMPARE

10

2

EVALUATION RESULTS

STORE OPERATION PROCEDURE

3

1

OPERATION SIGNALS

OPERATOR

PROCESS DATA

4

# FIG. 2

```
              ┌─────────┐
              │  START  │
              └─────────┘
                   │
S101 ─┐   ┌────────────────────┐        ┌──────────┐
      └── │  READ EXPERT DATA  │ ◄───── │  EXPERT  │
          └────────────────────┘        │   DATA   │
                   │                     └──────────┘
S103 ─┐   ┌────────────────────┐        ┌──────────────┐
      └── │  READ TRAINEE DATA │ ◄───── │ TRAINEE DATA │
          └────────────────────┘        └──────────────┘
                   │
S105 ─┐   ┌────────────────────┐
      └── │      ENCODE        │
          └────────────────────┘
                   │
      ┌────────────────────────────────┐
S107 ─┐  │  ┌──────────────────────┐   │
      └──│  │  EVALUATE RUNNING    │   │
         │  │  OPERATION PROCEDURE │   │
         │  └──────────────────────┘   │
         │            │                │
S109 ─┐  │  ┌──────────────────────┐   │
      └──│  │  EVALUATE RUNNING    │   │
         │  │  OPERATION TIMING    │   │
         │  └──────────────────────┘   │
         │            │                │
S111 ─┐  │  ┌──────────────────────┐   │
      └──│  │  EVALUATE STABILITY  │   │
         │  └──────────────────────┘   │
      └────────────────────────────────┘
                   │
S113 ─┐   ┌────────────────────┐
      └── │  CALCULATE SCORES  │
          └────────────────────┘
                   │
S115 ─┐   ┌────────────────────┐
      └── │  DISPLAY RESULTS   │
          └────────────────────┘
                   │
              ┌─────────┐
              │   END   │
              └─────────┘
```

## FIG. 3A

| MESSAGE NUMBER | OPERATOR NAME | EVENT DETECTION TIME POINT | FUNCTIONAL BLOCK NAME | MESSAGE CONTENT |
|---|---|---|---|---|
| 001 | | 2011/08/31 18:35:23 | PI001 | PI-001 PRES H |
| 001 | | 2011/08/31 18:35:23 | PI001 | PI-001 PRES HH |
| 002 | | 2011/08/31 18:35:23 | PI001 | PI-001 PRES HH RCV |
| 003 | | 2011/08/31 18:35:23 | PAL001 | PAL-001 ALARM |
| 001 | | 2011/08/31 18:35:25 | PIA001 | PIA-001 PRES H |
| 002 | | 2011/08/31 18:35:25 | PIA001 | PIA-001 PRES H RCV |
| 004 | ABC | 2011/08/31 18:35:39 | TC001 | TC-001 AUT |
| 005 | | 2011/08/31 18:35:38 | TC001 | TC-001 ACK |
| 006 | ABC | 2011/08/31 18:35:41 | TC001 | TC-001 SV UP |
| 006 | ABC | 2011/08/31 18:36:09 | HS001 | HS-001 VALVE OPEN |
| 003 | | 2011/08/31 18:36:11 | ES001 | ES-001 ACK |
| 006 | ABC | 2011/08/31 18:36:15 | HS001 | HS-002 VALVE OPEN |
| 003 | | 2011/08/31 18:36:17 | ES001 | ES-002 ACK |
| 00? | | 2011/08/31 18:36:17 | IN001 | INT01202 1 TRIP OF P APHC |

## FIG. 3B

FUNCTIONAL BLOCK NAME

OPERATION CODE

| | | |
|---|---|---|
| 1065 | PC005 | CA |
| 1115 | PC006 | VD |
| 1409 | FC005 | PD |
| 1518 | PC007 | VI |
| ... | ... | |

ELAPSED TIME FROM START OF OPERATION [s]

ENCODED OPERATION DATA

## FIG. 3C

ELAPSED TIME FROM START OF OPERATION [s]

THE NUMBER OF ALARMS

| | |
|---|---|
| 1022 | 6 |
| 1023 | 5 |
| 1024 | 5 |
| 1026 | 6 |
| ... | ... |

ALARM DATA

## FIG. 3D

CHARACTER STRING DATA

| PC005 | CA | PC006 VD...... |
|---|---|---|

# FIG. 4

ENCODED EXPERT
OPERATION DATA

ENCODED TRAINEE
OPERATION DATA

| t1=50(s) | FUNCTIONAL BLOCK NAME | OPERATION CODE |
|---|---|---|
| 1065 | PC010 | CA |
| 1115 | PC011 | VD |
| 1409 | FC010 | PD |
| 1518 | PC012 | MI |
| ... | ... | |

| t2=63(s) | FUNCTIONAL BLOCK NAME | OPERATION CODE |
|---|---|---|
| 1045 | PC010 | CA |
| 1108 | PC011 | VD |
| 1311 | FC010 | PD |
| 1418 | PC012 | MI |
| ... | ... | |

ERROR RATIO $\Delta t = F(t1, t2)$

e.g.) $\Delta t = |t2-t1|/t1 = (63-50)/50 = 0.26$

# FIG. 5

| ELAPSED TIME FROM START OF OPERATION [s] | THE NUMBER OF ALARMS |
| --- | --- |

$\Delta t$

| 1022 | 6 |
| 1023 | 5 |
| 1024 | 5 |
| 1026 | 6 |
| ... | ... |

EXPERT ALARM DATA

| ELAPSED TIME FROM START OF OPERATION [s] | THE NUMBER OF ALARMS |
| --- | --- |

$\Delta t$

| 1022 | 6 |
| 1023 | 5 |
| 1024 | 5 |
| 1026 | 6 |
| ... | ... |

TRAINEE ALARM DATA

ERROR RATIO $\Delta s = F(S_T, S_M)$

e. g. ) $\Delta s = S_T / S_M$

EP 2 821 983 A1

FIG. 6

**FIG. 7**

| | MODEL PROCEDURE | | TRAINEE $\alpha$ | | TRAINEE $\beta$ | |
|---|---|---|---|---|---|---|
| | OPERATION | OPERATION TIME | OPERATION | OPERATION TIME | OPERATION | OPERATION TIME |
| 1 | A | 10 | A | 20 | A | 10 |
| 2 | B | 20 | B | 30 | B | 10 |
| 3 | C | 30 | D | 30 | D | 10 |
| 4 | D | 10 | C | 10 | C | 10 |
| 5 | E | 20 | E | 20 | E | 10 |

EP 2 821 983 A1

# FIG. 8

ENCODED EXPERT
OPERATION DATA

ENCODED TRAINEE
OPERATION DATA

| s1 | 100 | 1065 | PCO10 | CA |
|---|---|---|---|---|
| | 105 | 1115 | PCO11 | VD |
| | 110 | 1409 | FCO10 | PD |
| | 120 | 1518 | PCO12 | MI |
| | STATE QUANTITY | ... | ... | |

| s2 | 98 | 1045 | PCO10 | CA |
|---|---|---|---|---|
| | 102 | 1108 | PCO11 | VD |
| | 100 | 1311 | FCO10 | PD |
| | 130 | 1418 | PCO12 | MI |
| | STATE QUANTITY | ... | ... | |

ERROR RATIO $\Delta s = F(s1, s2)$

e. g. ) $\Delta s = |s2 - s1| / s1$

EP 2 821 983 A1

## INTERNATIONAL SEARCH REPORT

| | International application No. |
|---|---|
| | PCT/JP2013/000896 |

A.   CLASSIFICATION OF SUBJECT MATTER
*G09B19/00*(2006.01)i, *G05B23/02*(2006.01)i, *G06Q50/04*(2012.01)i, *G06Q50/20*
(2012.01)i, *G09B9/00*(2006.01)i

According to International Patent Classification (IPC) or to both national classification and IPC

B.   FIELDS SEARCHED

Minimum documentation searched (classification system followed by classification symbols)
G09B19/00-19/26, G09B9/00-9/56, G05B23/02, G06Q50/04, G06Q50/20

Documentation searched other than minimum documentation to the extent that such documents are included in the fields searched
Jitsuyo Shinan Koho          1922–1996   Jitsuyo Shinan Toroku Koho   1996–2013
Kokai Jitsuyo Shinan Koho    1971–2013   Toroku Jitsuyo Shinan Koho   1994–2013

Electronic data base consulted during the international search (name of data base and, where practicable, search terms used)

C.   DOCUMENTS CONSIDERED TO BE RELEVANT

| Category* | Citation of document, with indication, where appropriate, of the relevant passages | Relevant to claim No. |
|---|---|---|
| Y | JP 2009-86542 A  (Osaka Gas Co., Ltd.), 23 April 2009 (23.04.2009), entire text; all drawings (Family: none) | 1-5 |
| Y | JP 8-320644 A  (Mitsubishi Electric Corp.), 03 December 1996 (03.12.1996), entire text; all drawings (Family: none) | 1-5 |
| Y | JP 6-130885 A  (Mitsubishi Electric Corp.), 13 May 1994 (13.05.1994), entire text; all drawings (Family: none) | 1-5 |

☒   Further documents are listed in the continuation of Box C.          ☐   See patent family annex.

| | |
|---|---|
| *    Special categories of cited documents:<br>"A"   document defining the general state of the art which is not considered to be of particular relevance<br>"E"   earlier application or patent but published on or after the international filing date<br>"L"   document which may throw doubts on priority claim(s) or which is cited to establish the publication date of another citation or other special reason (as specified)<br>"O"   document referring to an oral disclosure, use, exhibition or other means<br>"P"   document published prior to the international filing date but later than the priority date claimed | "T"   later document published after the international filing date or priority date and not in conflict with the application but cited to understand the principle or theory underlying the invention<br>"X"   document of particular relevance; the claimed invention cannot be considered novel or cannot be considered to involve an inventive step when the document is taken alone<br>"Y"   document of particular relevance; the claimed invention cannot be considered to involve an inventive step when the document is combined with one or more other such documents, such combination being obvious to a person skilled in the art<br>"&"   document member of the same patent family |

| Date of the actual completion of the international search | Date of mailing of the international search report |
|---|---|
| 16 May, 2013 (16.05.13) | 28 May, 2013 (28.05.13) |

| Name and mailing address of the ISA/ <br> Japanese Patent Office | Authorized officer |
|---|---|
| Facsimile No. | Telephone No. |

Form PCT/ISA/210 (second sheet) (July 2009)

**INTERNATIONAL SEARCH REPORT**

International application No.

PCT/JP2013/000896

C (Continuation).    DOCUMENTS CONSIDERED TO BE RELEVANT

| Category* | Citation of document, with indication, where appropriate, of the relevant passages | Relevant to claim No. |
|---|---|---|
| A | JP 2003-271048 A  (Mitsubishi Heavy Industries, Ltd.), 25 September 2003 (25.09.2003), entire text; all drawings (Family: none) | 1-5 |
| A | JP 8-16092 A  (Mitsubishi Electric Corp.), 19 January 1996 (19.01.1996), entire text; all drawings (Family: none) | 1-5 |
| A | JP 9-297524 A  (Fujitsu Ltd.), 18 November 1997 (18.11.1997), entire text; all drawings (Family: none) | 1-5 |
| A | JP 2001-67113 A  (Toshiba Corp.), 16 March 2001 (16.03.2001), entire text; all drawings (Family: none) | 1-5 |
| A | JP 2001-228790 A  (Mitsubishi Electric Corp.), 24 August 2001 (24.08.2001), entire text; all drawings (Family: none) | 1-5 |
| A | JP 2010-181546 A  (Mitsubishi Electric Corp.), 19 August 2010 (19.08.2010), entire text; all drawings (Family: none) | 1-5 |

Form PCT/ISA/210 (continuation of second sheet) (July 2009)

**INTERNATIONAL SEARCH REPORT**

International application No.

PCT/JP2013/000896

Claim 4 recites additional specific items with regard to the use of "the error rate Δt," and cites claim 1.

However, "the error rate Δt," is an item specified in claim 2; therefore, it is thought that there is no consistency unless claim 4 cites claim 2.

Therefore, this search report was created with "... as cited in claim 1" in claim 4 as an error for "... as cited in claim 2."

Form PCT/ISA/210 (extra sheet) (July 2009)

**REFERENCES CITED IN THE DESCRIPTION**

**Patent documents cited in the description**

- JP 2009086542 A
- JP 2139590 A
- JP 8320644 A